# EUROPEAN PATENT SPECIFICATION

(11) **EP 4 480 443 B1**
(45) Date of publication and mention of the grant of the patent: **30.09.2026**
(21) Application number: 24183677.4
(22) Date of filing: 21.06.2024
(51) Int. Cl.: A61C 5/00, A61C 7/08, A61C 7/12, A61C 7/14

(54) **ORTHODONTIC RETAINER POSITIONING DEVICE**
POSITIONIERUNGSVORRICHTUNG FÜR ORTHODONTISCHE HALTERUNG
GUIDE DE POSITIONNEMENT D'UN APPAREIL DE CONTENTION ORTHODONTIQUE

(30) Priority: 22.06.2023 GB 202309442
(43) Date of publication of application: 25.12.2024
(73) Proprietor: Abela, Stefan, Cambridge Cambridgeshire CB5 8DD (GB)
(72) Inventor: Abela, Stefan, Cambridge Cambridgeshire CB5 8DD (GB)
(74) Representative: Mathys & Squire

(56) References cited:
- US-A- 5 087 202
- US-A1- 2007 184 398
- US-A1- 2016 346 063
- US-A1- 2019 262 103
- US-A1- 2022 338 960

## Description

### Field of the invention

The invention relates to an orthodontic retainer positioning device for locating a retainer wire on a row of teeth during fitting, and to an orthodontic retainer kit. The invention further relates to a method of manufacture. Further aspects of the disclosure relate to an orthodontic retainer wire and methods of applying and manufacturing the orthodontic retainer wire.

### Background

Retention or maintenance of tooth positioning following orthodontic treatment has been a continuous topic of discussion amongst clinicians including orthodontists, dental surgeons and other members that make up the dental profession.

Relapse is the technical term for unwanted tooth movement that patients normally experience following orthodontic treatment. Retention is the technical term for maintaining the teeth in the planned position and various methods have been proposed and documented over the past decades.

Principally there are two types of dental retainers used in orthodontic treatment: fixed retainers, which are lengths of wire glued to the inner aspect of the front teeth; and removable retainers, which are worn at night-time.

Both of these retainer types have their own inherent advantages and disadvantages and provide different levels of effectiveness. Following treatment, patients are expected to be cooperative with the removable retainer retention regimen prescribed by their clinician as otherwise no benefit is inferred.

Removable retainers come in two main forms: Hawley appliances made of acrylic; and thermoformed/vacuum-formed retainers (VFRs), which are gumshield-type devices moulded to fit snugly over a patient's upper or lower teeth. The main drawback of removable retainers remains poor patient compliance in the long term.

For this reason, fixed retainers have gained popularity. Despite their effectiveness, fixed retention has been a subject of controversy due to breakages, the need for maintenance and iatrogenic damage. The latter involves unwanted tooth movement by the fixed retainer itself due to stored energy which when relayed onto the teeth manifests as unwanted tooth movement. In addition, the bonding of fixed retainers onto teeth poses a greater risk of oral hygiene deterioration by encouraging plaque formation. Fixed retainer breakages can be observed due to physical breakage, movement of teeth or failure of the dental adhesive to adhere to the teeth surface over time. Failure rates can be as high as 71% which is very high in clinical terms. Fixed retainers are not a panacea for preventing unwanted tooth movement and a solution still remains to provide long term tooth stability following orthodontic treatment.

The current consensus between clinicians is that the best option is for removable retainers to be used in conjunction with fixed retainers, as this provides the best overall solution to the patient.

When used in conjunction, removable retainers help to protect fixed retainers from breakages, improve their longevity, and also act as the main retainers in case of permanent retainer failure further protecting the patient from unwanted tooth movement.

Traditionally removable and fixed retainers are fitted to patients 'teeth at separate appointments, which creates a time-interval between retainer fittings during which patients can exhibit relapse.

In addition, the fitting of fixed retainers is a very time-consuming and challenging technique for the clinician, which requires a significant amount of chair-side time and creates a potential hurdle to the more widespread adoption of fixed retainers. It is highly important that fixed retainers are fitted accurately, as poor fitting can create tension in the retainer wire that can subsequently lead to undesired tooth movement.

It is desirable to provide a solution which both assists in the accurate fitting of fixed retainers, and reduces the "chair time" taken for retainers to be fitted by a clinician.

Attempts to simplify the application of permanent retainers have been made in the prior art.

EP381871A1 discloses a method which involves: making a cast of a patient's teeth, placing a retainer wire in the correct position on the cast; making a mould of the cast and wire together; making perforations through the mould at the positions where adhesive is required; and filling those perforations with adhesive. The mould is then placed over the patient's teeth with the wire positioned inside it, excess adhesive is squeezed out through the perforations, and the mould is removed, leaving the retainer wire adhered to the teeth.

CN111920534A discloses: 3D printing a cast of the patient's teeth with a retainer wire and resin attachment points in the desired position; thermoplastic moulding of a mould over the cast, so that the mould is a mould of the patient's teeth with resin wells and a groove for the retainer wire formed in the mould. This device is then used by placing the retainer wire in the groove inside the mould, applying photocuring resin inside the resin wells in the mould, placing the locator over the patient's teeth, and curing the resin.

Similarly, the method of US2010239992A1 involves making a model of a patient's teeth, and moulding a plastic "shell" on the model. The shell has at least two "wire attachment members" which are used to position the wire with respect to the patient's teeth. The shell is formed with reservoirs for adhesive, and the wire is held by the shell while the adhesive solidifies, following which the shell can be removed from the patient's teeth.

US2019262103A1 shows a custom made delivery tray for positioning a wire. A micro tube housing on both sides of the tray holds the arch wire to be secure on the teeth.

### Summary of Invention

The invention provides an orthodontic retainer positioning device, an orthodontic retainer kit, and a method of manufacture as defined in the appended independent claims, to which reference should now be made. Preferred or advantageous features of the invention are set out in the dependent sub-claims.

### Orthodontic Retainer Positioning Device

In one aspect of the present disclosure, there is provided an orthodontic retainer positioning device for locating, or arranged to (or configured to) locate, a retainer wire on a row of teeth. The positioning device comprises a locator arranged to (or configured to) fit over at least a portion of the row of teeth. The locator is preferably arranged to (or configured to) expose the area of the row of teeth to which the retainer wire is to be fitted. The locator is preferably arranged to (or configured to) support the retainer wire in a predetermined position relative to the area of the row of teeth to which the retainer wire is to be fitted.

In another aspect of the present disclosure, there is provided an orthodontic retainer positioning device arranged to locate a retainer wire on a row of teeth, the device comprising: a locator arranged to fit over at least a portion of a row of teeth (e.g. a row of teeth to which a retainer wire is to be fitted), wherein the locator comprises an open section that is arranged to expose an area of the row of teeth; and one or more locating members connected to the locator, the locating members being arranged to support a retainer wire so that, in use, the locating members hold the retainer wire in position relative to the area of the row of teeth so as to aid the fitting of the retainer wire to the row of teeth.

The positioning device is usable to locate a retainer wire in a predetermined position against a row of teeth, to aid the quick and accurate application of the retainer wire to the row of teeth. In use, the locator is fitted over the row of teeth, and the area of the row of teeth to which the retainer wire is to be fitted remains exposed. The locator supports the retainer wire in position against the exposed area of the row of teeth, which allows a clinician to quickly and easily apply dental adhesive to adhere the retainer wire to the teeth. The retainer wire then acts as a fixed retainer once adhered in place.

As the locator supports the retainer wire in the desired position during fitting, the clinician no longer has to perform the difficult task of manipulating the wire and holding the wire steady in the correct position while simultaneously applying adhesive. This simplifies and speeds up the application procedure for the clinician, and improves accuracy by ensuring that the retainer wire is applied in the correct position on the row of teeth. This solution also reduces the likelihood of the retainer wire being applied to the teeth in a tensioned or twisted state, which reduces the risk of unwanted tooth movement caused by tension in the retainer wire.

Devices in prior art documents such as EP381871A1, CN111920534A and US2010239992A1 have aimed to simplify the fitting of fixed retainers by first fitting a retainer wire in position on a cast of a patient's teeth, and then creating a mould which encapsulates the retainer wire and the patient's teeth. The mould is then transferred onto the teeth with both the retainer wire and dental adhesive inside the mould, so that the wire and adhesive are automatically positioned on the teeth without the need for a clinician to carry out any manual operations. The moulds are then removed and disposed of, leaving the wire adhered in place.

The positioning device of the present invention, on the other hand, provides a positioning aid for a professional clinician (for example a dentist or orthodontist), but still requires that the clinician perform the task of adhering the retainer wire to the teeth. Unlike the devices of EP381871A1, CN111920534A and US2010239992A1, the locator in the present invention is arranged to expose the area of the row of teeth to which the retainer wire is to be fitted. This provides the clinician with access to the required area of teeth, and allows the clinician to fit the retainer wire. The devices of EP381871A1, CN111920534A and US2010239992A1 on the other hand entirely encapsulate the patient's teeth and the retainer wire, as it is intended that the wire should be adhered to the teeth inside the mould, without any action from a clinician. As the wire and the adhesive are both contained inside the mould during fitting, potential drawbacks with these devices include a lack of control over the adhesive inside the mould, which may become smeared onto the surface of the teeth as the mould is put into position over the teeth, and a lack of control over the contact area between the teeth and the adhesive.

The positioning device of the present invention provides a solution which enables clinicians to still carry out their skilled role in fitting fixed retainer wires, with the added assistance of the locator which holds the wire in the correct position. This eases the clinician's task by removing the fiddly task of holding the wire in position, while still enabling the clinician to exert judgment over the quantity and positioning of adhesive that is used to adhere the retainer wire to the teeth.

As the majority of fixed retainers are applied to the lingual side of the teeth, the locator is preferably arranged to (or configured to) support the retainer wire in a predetermined position on a lingual side of the row of teeth. The area of the row of teeth to which the retainer wire is to be fitted is typically a lingual area of the teeth. The locator is thus preferably arranged to (or configured to) expose a lingual area of the row of teeth, so that the retainer wire can be fitted to the exposed lingual area of the teeth.

In an alternative embodiment, however, the locator may be arranged to (or configured to) support the retainer wire in a predetermined position on a buccal side of the row of teeth.

The present invention will be described primarily in relation to the application of retainer wires to the lingual aspect of teeth. In certain situations however, for example following dental trauma, it may be desirable to fit a fixed retainer to the buccal side of a row of teeth. The present invention may be arranged to (or configured to) allow this simply by shaping the locator to expose the buccal area of the teeth to which the retainer wire is to be fitted. The invention is thus not limited to lingual side retainers.

Preferably, the locating members are detachable from the locator, where this provides a locator that can be used as a removable retainer as well as being used to fit a fixed retaining wire.

In the present invention, the locating members comprise a weakened section (e.g. a weakened attachment point, the locating members being connected to the locator at this attachment point), whereby the locating members can be detached from the locator by breaking this weakened section of the locating members.

### 2-in-1 Fixed and Removable Retainer solution

In an aspect of the disclosure, and according to the present invention, there is provided a modified removable orthodontic retainer that acts as transfer medium, a positioning device for locating, and securing, a uniquely-designed fixed retainer wire on a pre-determined position over the selected row of teeth. The modified removable retainer comprises of securing arms configured to secure a precise fit of the fixed retainer over the chosen row of teeth. The removable retainer is configured to expose the lingual aspect of the teeth primarily incisors and canines bilaterally to which the retainer wire is to be fitted. The proposed retainer aids the quick and accurate application of the fixed retainer wire to the row of teeth. The locator arms that support the fixed retainer wire in position against the exposed area of the row of teeth, allow the direct application of the ideal and uniform amount of dental adhesive to adhere the fixed retainer wire to the teeth. The retainer wire then acts as a fixed retainer once adhered in place and the modified removable retainers will also act as the long-term removable retainer for the end user thus enabling the provision of two types of retainers in one step.

The disclosed device renders more efficient a clinician's delivery of two types of retainers. The disclosed device decreases chair-side and surgery time rendering it much more cost-effective than existing devices, the device further enables the condensing of all procedures in a single appointment. The locator arms used to modify the removable retainer and steady the fixed retainers may be easily detached as the end-points of attachment may be weakened during the manufacturing stage.

The device comprises one or a plurality of locating members connected to the locator.

Preferably, the locating members are arranged to protrude into the open section.

Preferably, the locator comprises a u-shaped wall that defines a channel, wherein the locator is arranged to be placed over a row of teeth such that the teeth are located in the channel.

Preferably, the locator comprises a curved wall and/or a convex wall.

Preferably, the open section comprises a cut-out that extends along the wall of the locator.

Preferably, the open section is arranged to expose a lingual and/or buccal side of at least one tooth, at least three teeth and/or at least five teeth.

Preferably, the open section is arranged to expose at least 30%, at least 50%, and/or at least 75% of a lingual and/or buccal side of one or more teeth.

The locator is preferably arranged to (or configured to) support the retainer wire in a predetermined position relative to the area of the row of teeth to which the retainer wire is to be fitted.

The device comprises a plurality of locating members connected to the locator, and the locating members are arranged to (or configured to) support the retainer wire in position.

The locating members may be attached to the locator in a variety of positions, as long as they support the retainer wire in the position required for adhering the wire to the teeth. In some preferred embodiments, the locating members may be attached to a lingual side of the locator, and arranged to (or configured to) extend, project or protrude out of the lingual side of the locator. Alternatively, the locating members may be attached to an edge of the locator, for example an edge of the locator which bounds the exposed area of the teeth to which the retainer wire is to be fitted.

The locating members may be locating arms. Each locating arm may be attached to the locator at a first end of the arm, and the locating members may be arranged to (or configured to) support the retainer wire at or near a second end of the locating arm.

The first ends of the locating arms may be attached to an edge of the locator, and arranged to (or configured to) project in an upward or downward direction when the locator is fitted over the row of teeth. The first ends of the locating arms may be attached to an edge of the locator bounding the exposed area of teeth to which the retainer wire is to be fitted, and arranged to (or configured to) project from that edge in an apical direction (towards the roots of the teeth) when the locator is fitted over the row of teeth.

The locating members may be a plurality of elastic bands. For example the locator may comprise a plurality of grooves and/or projections arranged to (or configured to) hold one or more elastic bands, so that the retainer wire is held against the row of teeth by the elastic force of the bands. The grooves and/or projections may be arranged to (or configured to) hold one or more elastic bands so that the elastic bands extend across the exposed area of the row of teeth.

The locating members may each comprise a locating portion arranged to (or configured to) hold the retainer wire in position. The locating portion may be, for example, a notch, hook, slot or slit formed in the locating member.

The locating members may alternatively be arranged to (or configured to) hold the retainer wire in position against the teeth by a spring force exerted by the locating members against the wire. The locating members may be resilient locating members, and may be arranged to (or configured to) bias the retainer wire against the area of teeth to which the retainer wire is to be adhered.

The locating members are detachable from the locator. This advantageously allows the locating members to be detached and removed from the locator after the retainer wire has been fitted, so that the locator may be repurposed as a removable retainer to be worn in addition to the fixed retainer wire. By removing the locating members, the locator that is left may preferably be a removable retainer arranged to (or configured to) fit over the row of teeth on which the retainer wire is fitted.

The locator may take the form of a gumshield-type device which is shaped to fit over at least a portion of a row of teeth. The locator is preferably a "shell" which is shaped to fit tightly over the contours of the row of teeth.

In a preferred embodiment, the locator is moulded to receive at least a portion of the row of teeth. The locator may be moulded to conform exactly to the shape of the show of teeth, for example by moulding the locator based on an impression or 3D scan of the row of teeth. For example the locator may be a vacuum formed, pressure formed or thermoformed locator moulded to receive the row of teeth.

The locator preferably comprises an open section which is arranged to (or configured to) locate over the area of the row of teeth to which the retainer wire is to be fitted when the locator is fitted over the row of teeth, such that the area of the row of teeth is exposed through the open section in the locator. The open section may be a gap or cut-out section in the locator, i.e. a gap in the material of the locator so that an area of the row of teeth is exposed through the gap. The open section in the locator is preferably provided on a lingual side of the locator, such that the open section exposes an area on the lingual side of the row of teeth, to which the retainer wire is to be fitted.

The open section may be a window formed in the locator, i.e. an opening formed through the material of the locator.

When the locator comprises an open window through which an area of the row of teeth is exposed, there may be locating members which extend partially or entirely across the window to position the retainer in place relative to the row of teeth. In one example, the locating members may be one or more elastic bands, and the locator may comprise a plurality of grooves and/or projections arranged to (or configured to) hold the one or more elastic bands stretched across the window, so that the retainer wire is held against the row of teeth by the elastic force of the bands. For example the locator may comprise a first projection or groove on an apical side of the window, for holding a first end of the elastic band, and a second projection or groove on a coronal side of the window, for holding a second end of the elastic band, so that the elastic band is stretched across the window.

The open section may be fully surrounded by the material of the locator, such that the open section is a window through the locator, or the open section may be a gap in the locator that is only partially surrounded by the material of the locator.

In a particularly preferred embodiment, the locator comprises a vacuum formed retainer (VFR).

According to the invention, the locator is usable as a removable retainer after the retainer wire has been fitted. In embodiments comprising detachable locating members, the locator may advantageously be usable as a removable retainer once the locating members have been detached.

The locator may preferably be formed from a polypropylene or polyvinylchloride (PVC) material. Preferably the locator is formed from transparent material, particularly preferably colourless transparent material. The locator may be made using a thermoforming process, using vacuum- or pressure-thermoforming.

The locator preferably fits over the entire arch of teeth. In some embodiments, however, the locator may be arranged to (or configured to) fit only from canine to canine - such a locator may act as a clip-on removable retainer.

### Kit of parts

In an aspect of the present disclosure and the invention, there is provided an orthodontic retainer kit, comprising an orthodontic retainer positioning device, and an orthodontic retainer wire. The orthodontic retainer positioning device is a positioning device as described above in relation to the first aspect. The orthodontic retainer wire may preferably comprise a plurality of adhesive carriers arranged to (or configured to) receive a quantity of adhesive, preferably in which the adhesive carriers are fixed in position relative to the retainer wire.

As described above in relation to the first aspect, the orthodontic retainer positioning device provides a significant advantage during application of a fixed retainer wire to a row of teeth, by holding the retainer wire in the desired location relative to the teeth while a clinician applies adhesive to adhere the wire onto the teeth.

The orthodontic retainer positioning device may advantageously be provided with a retainer wire in the form of a kit of parts. The positioning device and the retainer wire may thus be used in combination to fit a fixed retainer wire to a row of teeth.

In a preferred embodiment, the orthodontic retainer wire comprises a plurality of adhesive carriers arranged to (or configured to) receive a quantity of adhesive. The adhesive carriers are preferably fixed in position relative to the retainer wire. Each adhesive carrier is preferably arranged to (or configured to) receive a quantity of adhesive in a recess, cavity, chamber or aperture. The adhesive carriers are shaped to contain a quantity of adhesive, and to hold the adhesive in contact with both the wire (via the body of the adhesive carrier) and a tooth to which the adhesive is adhered.

To adhere the wire to the row of teeth, dental adhesive is applied into the adhesive carriers. The adhesive carriers are preferably arranged so (or configured so) that adhesive positioned in each carrier can contact the surface of a tooth to which the wire is to be adhered. Each adhesive carrier thus forms an attachment point to attach the retainer wire to a tooth. By providing adhesive carriers that are provided on the retainer wire, and fixed in position relative to the wire, the location and separation of the attachment points is set.

The separation and size of the adhesive carriers may be standard, or in a preferred embodiment the separation and/or size of the adhesive carriers may be selected based on measurements taken from the row of teeth to which the retainer wire is to be fitted. For example the separation between adjacent adhesive carriers may be tailored to suit the separation of a particular person's teeth.

The retainer wire may be manufactured based on measurements taken from the row of teeth to which the retainer is to be fitted, and the adhesive carriers may be positioned on the retainer wire to correspond to the spacing of the row of teeth. Adjacent adhesive carriers may be separated by separations that correspond to the separation between the teeth to which the adhesive carriers are to be attached.

The use of adhesive carriers on the retainer wire further simplifies the task of applying a retainer wire to a row of teeth, as when the positioning device holds the wire in position relative to the teeth, the clinician can quickly and easily apply adhesive into each adhesive carrier.

The adhesive carriers on the retainer wire also enable the use of a predetermined quantity of dental adhesive. In use, the adhesive carriers are filled with dental adhesive by a clinician, and any excess adhesive can be easily removed. This advantageously leads to adhesive bonds of uniform size and shape, which is more comfortable for the person wearing the fixed retainer wire, as the uniform size and shape of the adhesive bonds is more comfortable for the person's tongue.

By using a combination of the positioning device and the retainer wire, the clinician's task in applying the retainer wire is greatly simplified, and leads to a retainer wire that is reliably bonded to each tooth with a uniform adhesive bond.

The adhesive carriers are preferably formed integrally with the retainer wire.

In a preferred embodiment, the adhesive carriers comprise apertures in, or through, the retainer wire. The adhesive carriers may be formed by loops of wire formed integrally with the retainer wire, the apertures being formed in the loops of wire so that a loop of wire surrounds an open "aperture" capable of being filled with adhesive. The adhesive carriers are preferably apertures which are open on either side, and surrounded by retainer wire. This allows a first side of the carrier aperture to be placed against a tooth, while adhesive is applied from the second side of the carrier aperture until the aperture is completely filled with adhesive, and the adhesive is in contact with the tooth. Any excess adhesive may then be removed from the second (non-tooth-facing) side of the aperture, by leveling the adhesive with the edges of the carrier aperture. This may advantageously leave a uniform volume of adhesive inside the carrier aperture, and create an advantageously smooth finish on the adhesive bond, so that after the adhesive is cured each adhesive bond feels uniform to the tongue.

The retainer wire may comprise a plurality of loops of wire connected to one another by straight sections of wire.

The retainer wire preferably comprises at least two adhesive carriers, preferably four adhesive carriers, particularly preferably six adhesive carriers.

The retainer wire may be arranged to (or configured to) be fixed across any number of teeth, as prescribed by a clinician, and the retainer wire may comprise up to one adhesive carrier per tooth. Thus if the retainer wire is to be attached to six teeth, the wire may comprise up to six adhesive carriers, so that the wire may be adhered to some or all of the six teeth.

The location of the adhesive carriers may be determined by the teeth to which the wire is to be adhered. The retainer wire may comprise one adhesive carrier for each tooth to which the retainer wire is to be fixed.

In a particularly preferred embodiment, the length of the retainer wire corresponds to the distance between the six front teeth in the row of teeth, and the wire comprises six adhesive carriers, the separation between the centres of adjacent carriers corresponding to the separation between the centres of adjacent teeth.

As described above in relation to the orthodontic retainer positioning device aspect, according to the present invention, the locator is a removable retainer. The kit may thus comprise a removable retainer locator, and a retainer wire.

It will be appreciated that any of the disclosures herein may be provided in any combination. For example, the features described above with reference to the kit of parts may equally be implemented as a part of the orthodontic retainer positioning device described further above and *vice versa.* Similarly, the features described above with reference to the kit of parts may equally be implemented as a part of the method of manufacturing a device described below and *vice versa.*

In an aspect of the disclosure, an orthodontic retainer kit of parts comprises a modified removable orthodontic retainer that acts as a transfer medium, a positioning device, and the eventual removable retainer together with the fixed orthodontic retainer wire designed with equidistant interspersion of annular rings that house a specific amount of adhesive. The proposed fixed orthodontic retainer comprises a plurality of adhesive carriers configured to receive a set quantity of adhesive. The adhesive carriers are fixed in position with the locator arms from the modified removable retainer and thus allowing a more accurate placement than with all the current systems. Conventional systems on the market today only allow placement using a free-hand technique by the clinician and hence there are no mechanics that can prevent the introduction of bite distortion that can creep in from different amounts of adhesive between the individual teeth. With conventional systems, the variation in the depths of adhesive that application with a free-hand might introduce can lead to breakages and/or fractures at different parts of the fixed retainer (and this is a common clinical scenario).

As described above, the modified removable orthodontic retainer holds the retainer wire in the desired location relative to the teeth so that a clinician can secure the fixed retainer to a row of teeth without any compromises to the planned location.

The proposed device and technique allows for flexibility with the design of the fixed retainer where separation and size of the adhesive carriers may be standard. In a preferred embodiment, the size of the carriers is selected based on measurements taken from the row of teeth to which the retainer wire is to be fitted beforehand. The planning of the precise site of placement of adhesive on fixed retainers that is best fit onto the individual patient pre-placement is not possible with the conventional systems in which the clinicians place the carriers freehand. This disclosed system thus allows for both physical pre-planning on plaster models taken of the teeth prior to the removal of the braces aligners and digitally where the fabrication of the device can then be printed from 3-dimensional digital copies of a patients' teeth.

### Method of Applying an Orthodontic Retainer Wire to a Row of Teeth

In an aspect of the present disclosure which is excluded from the invention, there is provided a method of applying an orthodontic retainer wire to a row of teeth using the orthodontic retainer positioning device of the first aspect. The method comprises the steps of: placing the locator over a row of teeth, so that the area of the row of teeth to which the retainer wire is to be fitted is exposed;
placing a retainer wire on the locator, so that the locator supports the retainer wire in a predetermined position relative to the exposed area of the row of teeth;
applying adhesive to adhere the retainer wire to at least two teeth in the row of teeth; and removing the locator from the row of teeth.

This method provides a number of advantages to a clinician with the task of applying a fixed retainer wire to
The retainer wire may be positioned on one or more locating members connected to the locator. The retainer wire may be placed in a notch, hook, slot or slit in the locating member. Alternatively the retainer wire may be placed between the locating members and the row of teeth, and biased against the row of teeth by the locating members.

When a locator comprising detachable locating members is used, the method may comprise the additional step of detaching the locating members from the locator after the device has been removed from the row of teeth.

When a retainer wire comprising adhesive carriers is used, the method may comprise the step of positioning the retainer wire so that adhesive carriers in the retainer wire are positioned on the teeth to which the retainer wire is to be fixed. The method may comprise the further step of applying adhesive into the adhesive carriers in the retainer wire, so that the adhesive is in contact with the sides of the adhesive carriers and the teeth to which the retainer wire is to be fixed.

### Method of Manufacture

In an aspect of the present disclosure and the invention, there is provided a method of manufacturing an orthodontic retainer positioning device according to the first aspect. The method comprises the steps of: manufacturing a locator arranged to (or configured to) receive at least a portion of a row of teeth, and to expose an area of the row of teeth to which the retainer wire is to be adhered.

The locator may be moulded to the shape of the row of teeth. The locator may preferably be formed by vacuum forming, pressure forming, or thermo-forming the locator on a cast of the row of teeth. The locator may be formed from thermoplastic material, preferably transparent and colourless thermoplastic material.

In order to expose the area of teeth to which the retainer wire is to be adhered, the method may comprise the step of forming an open section in the locator corresponding to the area of the row of teeth to which the retainer wire is to be fitted. The open section may be formed by removing a section of the locator after it is formed. For example the locator may be moulded to conform to the shape of an entire row of teeth, and a section of the locator corresponding to the area where the retainer wire will be applied may then be removed from the locator, for example by cutting a section out of the locator.

The method may comprise the step of forming an open section in the lingual side of the locator, preferably by removing a lingual section of the locator. When the retainer wire is to be adhered to the lingual side of the row of teeth for example, a lingual section of the locator may be removed to create an open section corresponding to the lingual area of the row of teeth to which the retainer wire is to be affixed.

Preferably the method comprises the step of forming a plurality of locating members on the locator. The locating members may be moulded integrally with the locator. Alternatively the locating members may be adhered to the locator after the locator has been formed.

### Retainer Wire

Conventional retainer wires used as fixed retainers are straight multistranded wires, often formed from stainless steel, titanium or nickel-titanium. These are typically adhered onto teeth by clinicians who hold the wire in place and deposit adhesive in a "free-hand" manner. While this technology is tried and tested, it suffers from drawbacks that it is fiddly to fit, and a great deal of the success of the fixed retainer is down to the skill of the clinician who fits the retainer.

Differences in positioning of adhesive bonds, and the sizes and shapes of adhesive bonds, can lead to variations in the reliability of adhesion, and variations in the comfort experienced by the person wearing the fixed retainer.

Currently adhesive bonds, or "tags" are placed free-hand by the clinician, and occlusal (bite) checks have to be carried out post-placement of the fixed retainer. This renders the technique very time-consuming and technique sensitive, and demands a certain level of skill and experience from the clinician's side.

In an aspect of the present disclosure, there is provided an orthodontic retainer wire, comprising a plurality of adhesive carriers arranged to (or configured to) receive a quantity of adhesive, in which the adhesive carriers are fixed in position relative to the retainer wire. The adhesive carriers are preferably arranged (or configured) so that when adhesive is received in the adhesive carriers and the wire is positioned in contact with a row of teeth, the adhesive in the carriers is held in contact with both the wire and the surface of the teeth.

The adhesive carriers on the retainer wire advantageously allow for a pre-determined amount of adhesive to be placed in each carrier, thus ensuring uniform amounts of adhesive are provided at each attachment point. This allows the placement of adhesive (also known as composite resin or dental cement) to allow a very good bond strength onto the tooth tissue. The "adhesive carriers" have a limited capacity to receive a standardised amount of adhesive, which prevents use of excessive adhesive material. This retainer wire provides multiple benefits:
Firstly, it allows a more comfortable fit on the inner aspect of the teeth; Secondly it prevents a misbalanced bite, which can be created by some adhesive tags being larger than others;
Thirdly, the "adhesive carriers" ensure that the material used is as flush as possible to the tooth structure, which may advantageously reduce instances of breakages and adhesive bond failure, and improve conformity between the individual resin tags of the individual teeth; and
Fourthly, it will prevent the formation of an uneven bite due to the variance in the force produced by the teeth in the opposite jaw arising from an uneven thickness of the composite resin.

US5184955A relates to a device in which composite carriers are threaded on a permanent retainer wire. However, the retainer wire of the fifth aspect differs from US5184955A in several ways. Firstly, US5184955A makes it clear (col 2 lines 50-65) that this device is not to be used as a long-term retainer. Secondly, US5184955A teaches that the composite carriers should be movable along the wire (col 3 lines 8-9 & 25-28), and NOT fixed in position relative to the wire. US5184955A teaches that it is advantageous that the composite carriers can be moved along the wire, to allow fixing of the device as a temporary measure without the need for an expert dentist.

US2008/0057460A1 relates to another retainer wire on which a plurality of movable anchors are threaded. The anchors can be moved along the retainer wire to appropriate positions and then the anchors are bonded to teeth. The retainer wire of the fifth aspect differs from US2008/0057460A1

The retainer wire may be formed from a conventional retainer wire, for example a stainless steel, titanium or nickel-titanium retainer wire, which can vary in thickness as is known in the art.

For example preferred embodiments may comprise a 0.0195" twist flex stainless steel wire. Thicker wires, such as 0.0205" or 0.0215" variations, may also be used. The retainer wire may optionally be coated in a tooth-coloured resin for aesthetic reasons. The thickness and colour of the fixed wire component will be based on the clinicians' prescription.

The retainer wire of the fifth aspect can be constructed from machine-formed wires using Bender machines or using CAD-CAM technology. The dimension of the retainer wire can vary, and may range between 0.0195" to 0.0215" in multi-strand stainless steel, titanium or nickel-titanium, with or without or a white coating to render it tooth-coloured and thus more discreet. It will thus be considered herewith that the same or equivalent functions and structures or variations thereof may be accomplished by different embodiments that are also intended to be encompassed within the scope of the invention.

For attachment of a fixed retainer, the teeth will act as "bases" onto which the fixed retainer will attach. In the case of the lower jaw, the lower front 6 teeth are typically used as "bases" for attachment of the retainer wire. I the case of the top jaw, the number of "bases" used as attachment points can vary between two "bases" on the upper central incisors, to the front "four bases" to incorporate the lateral incisors, or all front six teeth totalling six "bases".

As non-limiting examples other fixed retainers wire materials can include Dentaflex co-axial and Dentaflex multi-stranded 0.018" wires or Orthoflex by Reliance, Itasca, Illinois, USA.

The adhesive carriers are preferably annular adhesive carriers. Each adhesive carrier is preferably arranged to (or configured to) receive a quantity of adhesive in a recess, cavity, chamber or aperture. The adhesive carriers are shaped to contain a quantity of adhesive, and to hold the adhesive in contact with both the wire (via the body of the adhesive carrier) and a tooth to which the adhesive is adhered.

To adhere the wire to the row of teeth, dental adhesive is applied into the adhesive carriers. The adhesive carriers are preferably arranged so (or configured so) that adhesive positioned in each carrier can contact the surface of a tooth to which the wire is to be adhered. Each adhesive carrier thus forms an attachment point to attach the retainer wire to a tooth. By providing adhesive carriers that are provided on the retainer wire, and fixed in position relative to the wire, the location and separation of the attachment points is set.

The separation and size of the adhesive carriers may be standard, or in a preferred embodiment the separation and/or size of the adhesive carriers may be selected based on measurements taken from the row of teeth to which the retainer wire is to be fitted. For example the separation between adjacent adhesive carriers may be tailored to suit the separation of a particular person's teeth.

The retainer wire may be manufactured based on measurements taken from the row of teeth, and the adhesive carriers may be positioned on the retainer wire to correspond to the spacing of the row of teeth. Adjacent adhesive carriers may be separated by separations that correspond to the separation between the teeth to which the adhesive carriers are to be attached.

A particular advantage of the present retainer wire is that it may be made to measure for a specific row of teeth, based on measurements and impressions taken as a standard part of orthodontic treatment. As the retainer wire and its adhesive carriers are manufactured to the correct dimensions for a particular row of teeth, the task of the clinician is greatly simplified, as the positioning of adhesive bonds is predetermined by the fixed adhesive carriers on the retainer wire. Having retainer wires that are fixed relative to the wire may advantageously make application of the present retainer wire far more straightforward and less fiddly than prior art solutions with movable composite wells threaded onto the wire, as those threaded composite walls may be prone to rotate and slide along the wire to undesired positions during the delicate fitting procedure.

The use of adhesive carriers on the retainer wire further simplifies the task of applying a retainer wire to a row of teeth, as when the positioning device holds the wire in position relative to the teeth, the clinician can quickly and easily apply adhesive into each adhesive carrier.

The adhesive carriers on the retainer wire also enable the use of a predetermined quantity of dental adhesive. In use, the adhesive carriers are filled with dental adhesive by a clinician, and any excess adhesive can be easily removed. This advantageously leads to adhesive bonds of uniform size and shape, which is more comfortable for the person wearing the fixed retainer wire, as the uniform size and shape of the adhesive bonds is more comfortable for the person's tongue.

By using a combination of the positioning device and the retainer wire, the clinician's task in applying the retainer wire is greatly simplified, and leads to a retainer wire that is reliably bonded to each tooth with a uniform adhesive bond.

The adhesive carriers are preferably formed integrally with the retainer wire.

In a preferred embodiment, the adhesive carriers comprise apertures in, or through, the retainer wire. The adhesive carriers may be formed by loops of wire formed integrally with the retainer wire, the apertures being formed in the loops of wire so that a loop of wire surrounds an open "aperture" capable of being filled with adhesive. The adhesive carriers are preferably apertures which are open on either side, and surrounded by retainer wire.

The adhesive carriers preferably have comprise a first opening arranged to (or configured to) contact a tooth, and a second opening through which adhesive may be applied into the carrier, the first and second openings being in fluid communication so that adhesive applied through the second opening contacts the tooth at the first opening. This allows the first side of the carrier to be placed against a tooth, while adhesive is applied from the second side of the carrier until the carrier is completely filled with adhesive, and the adhesive is in contact with the tooth via the first opening in the carrier. Any excess adhesive may then be removed from the second (non-tooth-facing) side of the carrier, by levelling the adhesive with the edges of the second opening. This may advantageously leave a uniform volume of adhesive inside the carrier, and create an advantageously smooth finish on the adhesive bond, so that after the adhesive is cured each adhesive bond feels uniform to the tongue.

The retainer wire may comprise a plurality of loops of wire connected to one another by straight sections of wire. Each loop of wire may thus form an adhesive carrier with two open sides and a thickness defined by the thickness of the wire forming the loop.

The number of adhesive carriers on the retainer wire may vary, and is determined by the orthodontic requirements of a particular wearer. The retainer wire preferably comprises at least two adhesive carriers, preferably four adhesive carriers, particularly preferably six adhesive carriers, or more than six adhesive carriers, depending how many teeth the retainer wire is arranged to (or configured to) span.

The location of the adhesive carriers may be determined by the teeth to which the wire is to be adhered. The retainer wire may comprise one adhesive carrier for each tooth to which the retainer wire is to be fixed.

The length of the retainer wire is preferably determined by the number of teeth which the wire is to span. In some embodiments, for example, the retainer wire may be arranged to (or configured to) span 4 teeth, or 6 teeth, or 8, 9 or 10 teeth, depending on the retainer style selected by a dental clinician.

In a particularly preferred embodiment, the length of the retainer wire corresponds to the distance between the six front teeth of the row of teeth, and the wire comprises six adhesive carriers, the separation between the centres of adjacent carriers corresponding to the separation between the centres of adjacent teeth.

As described above in relation to the first aspect, in the present invention, the locator is a removable retainer. The kit may thus comprise a removable retainer locator, and a retainer wire.

Any and all features described above in relation to the second aspect are equally applicable to the fifth aspect.

### Method of Applying a Fixed Retainer

In an aspect of the present disclosure, which is excluded from the present invention, there is provided a method of applying the orthodontic retainer wire of the fifth aspect to a row of teeth. The method may comprise the steps of: positioning the retainer wire of the fifth aspect over the row of teeth so that the adhesive carriers are positioned on the teeth to which the retainer wire is to be fixed; and
applying adhesive into the adhesive carriers, so that the adhesive is in contact with the sides of the adhesive carriers and the teeth to which the retainer wire is to be fixed.

The composite carriers preferably have a depth, or a thickness, corresponding to the thickness of the retainer wire, and the method may comprise the additional step of removing excess adhesive from the adhesive carriers, so that the adhesive does not project out of the adhesive carriers. Excess adhesive is preferably removed to leave the adhesive in the carrier level with the face of the carrier, so that a smooth and uniform adhesive bond is created at each carrier. This is advantageously more comfortable for the wearer of the retainer, compared to existing fixed retainers adhered with free-hand adhesive bonds of differing shapes and sizes.

### Method of manufacturing an Orthodontic Retainer Wire

In an aspect of the present disclosure and in the invention, there is provided a method of manufacturing an orthodontic retainer wire. The orthodontic retainer wire is preferably the orthodontic retainer wire of the fifth aspect. The method may comprise the steps of:
manufacturing a retainer wire based on measurements taken from a row of teeth, and forming adhesive carriers on the retainer wire in positions that correspond to the spacing of the row of teeth.

The retainer wire may be manufactured to have a length that corresponds to the distance along the row of teeth, preferably the distance between the outermost teeth to which the wire is to be fixed. For example when the retainer wire is to be affixed to the lingual side of the six front teeth, the wire may be manufactured with a length matching the distance between the outermost canine teeth, measured along the lingual side of the row of teeth. The distances between the centres of each tooth in the row of teeth may be measured, and the positions of the adhesive carriers on the wire may thus be fixed to correspond to the distances between the respective teeth to which each carrier will be fixed.

The measurements may be taken from a dental impression formed by taking a conventional mould of the row of teeth.

Alternatively, the measurements taken from the row of teeth may comprise a 3D scan of the patient's teeth.

The method preferably comprises the step of forming an adhesive carrier at each end of the retainer wire. The number of adhesive carriers on the wire may vary depending on the orthodontic situation in which the retainer wire is being used, but in all cases at least two adhesive carriers may be required to facilitate attachment of the retainer wire to the row of teeth. In preferred embodiments, the retainer wire comprises more than two adhesive carriers, so the method may comprise the step of forming adhesive carriers at a plurality of positions between the two ends.

The retainer wire is preferably constructed from multi-stranded stainless steel, titanium or nickel-titanium wire. In a preferred embodiment, the composite carriers are formed integrally with the wire, from the same material. In alternative embodiments, however, the composite carriers may be made from material different from that of the wire. For example the composite carriers may in some embodiments be formed from rings, from example rings of metal, welded between straight lengths of wire.

The retainer wire may be constructed using a variety of methods conventional in the art. In preferred embodiments, for example, the retainer wire may be manufactured from machine-formed wires using Bender machines or using CAD-CAM technology. The former method employs a pre-programmed machine that bends prefabricated wires. Alternatively, the specified retainer can be carved out of a specimen usually in the form of a block. For the CAD-CAM method, a virtual (digital) dental model is obtained by an intra-oral digital scanner. The fixed retainer is in turn designed by a compatible software and fabricated by a high-speed milling machine in an alloy selected by a dental professional. In a preferred embodiment, for example, the retainer wire may be fabricated by high-speed milling of a titanium alloy.

The present disclosure provides a unique orthodontic retainer kit, comprising a modified removable orthodontic retainer that acts as delivery medium, a positioner and locator and also serves as a the long-term removable retainer for the user. The disclosure allows for the fixed orthodontic retainer wire to be precisely directed onto the favourable anatomical area of the front teeth pre-determined beforehand onto which the fixed retainer is bonded onto. It provides a uniquely designed fixed retainer that houses a uniform and ideal amount of dental adhesive that is compatible with the opposing dentition. It provides a method of manufacture as defined in the appended independent claims, to which reference should now be made.

Various aspects of the disclosure provide:
1. A Unique 2-in-1 delivery of both types of orthodontic retainers which is currently not obtainable.
2. A much more cost-effective method of providing both types of orthodontic retainers where the modified removable retainers acts as a transfer medium, a positioning device for the fixed retainer and ends up being used as the definitive removable orthodontic retainer. The fixed orthodontic retainer provides stability of teeth during the day when they are not utilising the modified removable retainer, whilst the latter provides stability during the night and also protects the fixed retainer from nocturnal parafunctional habits such as grinding of teeth, brutism and clenching activities.
3. The fixed orthodontic retainer is designed specifically with uniformly interspersion of annular rings that house the precise amount of adhesive and the clinician's application can't be erroneous with regard to the amount of adhesive applied to each individual tooth. Further benefits include the elimination of the possibly of introducing distortions in the bite and excessive forces on one or more teeth during closure from the opposing dentition.
4. The site of adhesive placement hence the annular design of the fixed retainer can be planned beforehand without the patient being present. It can also be delivered on the same day as the braces removal to ensure that there is no time elapse between the removal of braces and unwanted movement of teeth needing re-treatment. Currently there is no method that permits same-day placement of the two types of retainers.
5. This invention does not rely on a clinician's or laboratory technician's skill by using a freehand type placement simplifying a technique which is regarded very skill demanding and time-consuming.

Devices in the prior art have aimed to simplify the fitting of fixed retainers by first fitting a retainer wire in position on a cast of a patient's teeth, and then creating a mould which encapsulates the retainer wire and the patient's teeth. The mould is then transferred onto the teeth with both the retainer wire and dental adhesive inside the mould, so that the wire and adhesive are automatically positioned on the teeth without the need for a clinician to carry out any manual operations. The moulds are then removed and disposed of, leaving the wire adhered in place.

The positioning device of the present invention, on the other hand, provides a positioning aid for a professional clinician (for example a dentist or orthodontist), but still requires that the clinician perform the task of adhering the retainer wire to the teeth. The locator in the present invention is configured to expose the area of the row of teeth to which the retainer wire is to be fitted. This provides the clinician with access to the required area of teeth, and allows the clinician to fit the retainer wire.

The object of the present invention is defined in the independent claims. Preferred or advantageous features of the invention are set out in the dependent sub-claims.

Any feature described as being carried out by an apparatus, an application, and a device may be carried out by any of an apparatus, an application, or a device. Where multiple apparatuses are described, each apparatus may be located on a single device.

Any feature in one aspect of the disclosure may be applied to other aspects of the invention, in any appropriate combination. In particular, method aspects may be applied to apparatus aspects, and vice versa.

Furthermore, any method disclosed herein may be implemented, in whole or in part, as a computer-implemented.

Any apparatus feature as described herein may also be provided as a method feature, and vice versa. As used herein, means plus function features may be expressed alternatively in terms of their corresponding structure, such as a suitably programmed processor and associated memory.

It should also be appreciated that particular combinations of the various features described and defined in any aspects of the disclosure can be implemented and/or supplied and/or used independently.

The disclosure extends to methods and/or apparatus substantially as herein described with reference to the accompanying drawings.

### Description of the drawings

Specific embodiments of the invention will be now be described by way of example, with reference to the accompanying drawings in which:
Figure 1 is a schematic illustration of a fixed retainer attached row of teeth, according to the prior art;
Figure 2 is an image of a transparent vacuum formed retainer (VFR), as known in the prior art;
Figure 3 is a schematic illustration of a transparent vacuum formed retainer (VFR), as known in the prior art;
Figure 4 is a schematic illustration of a retainer positioning device according to a first embodiment of the present invention;
Figure 5 is a schematic illustration of a retainer positioning device according to a second embodiment of the present invention;
Figure 6 is a schematic illustration of the retainer positioning device of Figure 6, with a retainer wire according to an aspect of the present invention;
Figure 7 is a schematic illustration of the retainer positioning device of Figure 6, with an alternative retainer wire according to another aspect of the present invention;
Figure 8 illustrates the retainer positioning device and retainer wire of Figure 8, worn over a row of teeth;
Figure 9 is a schematic illustration of a row of teeth fitted with a retainer wire according to an aspect of the present invention;
Figure 10 is a schematic illustration of the kit of Figures 8 and 9 being worn over a row of teeth, after removal of the locating members or locating elements;
Figure 11A-11D are schematic illustrations of retainer wires according to preferred aspects of the present application;
Figure 12 is a schematic illustration of the positioning device of Figures 7 to 10 being worn over a row of teeth, after removal of the locating elements, with an alternative embodiment of retainer wire affixed to the row of teeth;
Figure 13 is a schematic diagram of the retainer positioning device and retainer wire kit according to a preferred embodiment of the present invention;
Figure 14 is a schematic illustration of a retainer positioning device according to another aspect of the present invention;
Figure 15 is a schematic illustration of the retainer positioning device of Figure 14, with elastic band locating members in position.

### Description of the preferred embodiments

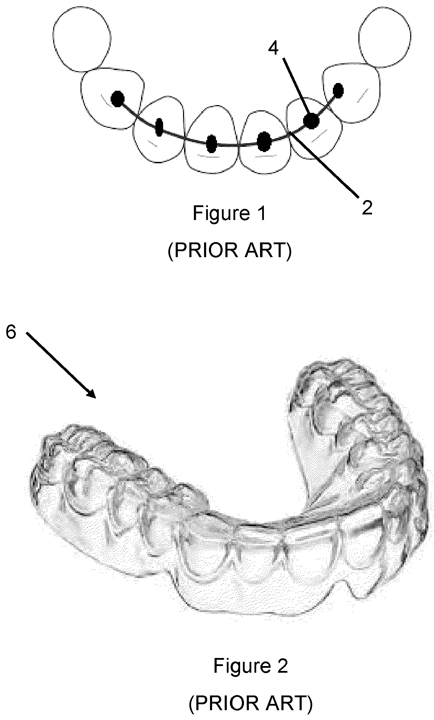

In the prior art, fixed retainer wires 2 are attached to teeth manually by clinicians, using lumps of adhesive (also known as dental composite, or dental cement) which are deposited onto the wire and the tooth by the clinician. The adhesive is cured, leaving "tags" 4 of hardened adhesive which attach the wire to the teeth, as shown in Figure 1. This process is fiddly and time consuming, as the clinician must manipulate the retainer wire into the correct position and hold it there while depositing adhesive in the correct locations. Drawbacks with this technique include the long period of "chair-time" required for fitting, as well as variability in the sizes and shapes of the adhesive tags which are left adhering the wire to the teeth.

One option to aid in the fitting process is to hold retainer wires in position with "silicone jigs", which jigs fit over the teeth and hold the fixed retainer wire against the surface of the teeth while the clinician applies adhesive. These jigs are both cumbersome and imprecise.

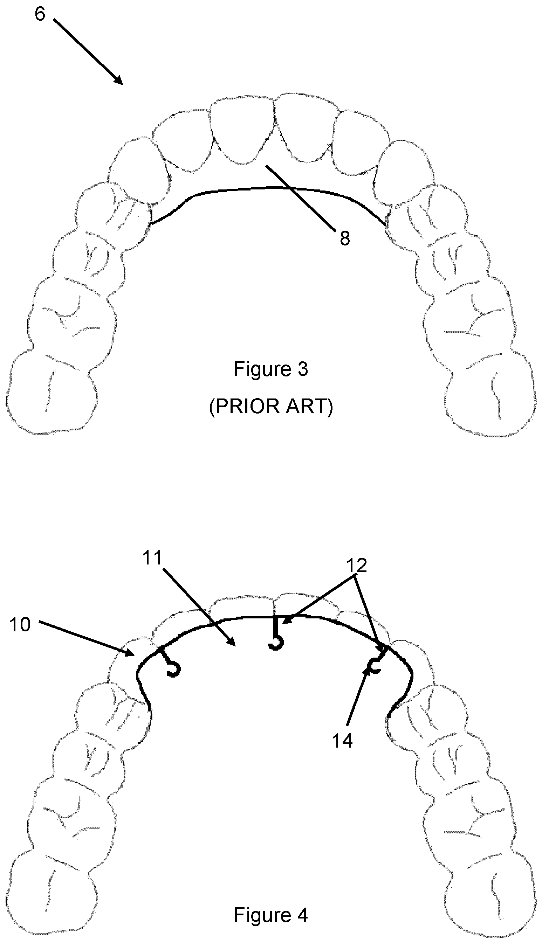

While fixed retainer wires are permanently adhered to teeth to prevent movement of the teeth, removable retainers are available as an alternative, or a complementary, solution. Figures 2 and 3 show a common type of removable retainer 6 known as a vacuum-formed retainer (VFR) or Essix retainers. VFRs are plastic devices which are moulded to the shape of a row of teeth using well known thermo-and vacuum (or pressure) forming technique. The resulting devices are gumshield-style plastic "shells" which fit tightly around the wearer's teeth, preventing or discouraging movement of the teeth. The precise shape of vacuum-formed retainers can vary, but the retainers typically encapsulate the entire row of teeth on either the upper or lower jaw, and typically the plastic extends over some areas of the wearer's gums adjacent the teeth.

Figure 3, for example, shows an area 8 of plastic retainer material covering an area of gum behind the front six teeth.

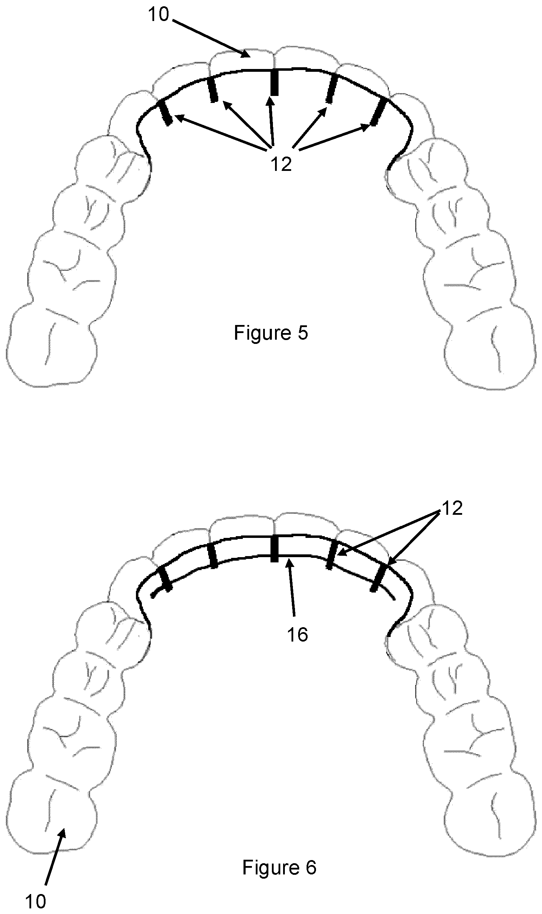

Figures 4 and 5 illustrate alternative embodiments of a retainer wire positioning device according to an aspect of the invention.

The positioning device comprises a locator 10 which is designed to fit over and around a row of teeth in like a gumshield or a removable retainer. Unlike a conventional removable retainer or gumshield, the locator 10 has an open section 11 which, when the locator is positioned over the row of teeth, exposes an area of the row of teeth. The open section is positioned so that the open section exposes the area of the teeth to which a fixed retainer is to be applied. The area onto which the fixed retainer is to be applied is determined by a dental professional.

Typically the locator is arranged to fit around a portion of the teeth of a user, so that the located encloses (on three sides) this portion of the teeth of the user. Typically, the locator 10 comprises a u-shaped wall that defines a channel, which channel fits over the row of teeth. The walls, and the channel, may be of a curved shape or a convex shape to enable the locator to be placed over a user's teeth. The open section 11 may then comprise a cut-out section in a part of the wall of the locator, which cut-out section exposes the area of the row of teeth. In particular, the wall may comprise two (typically substantially parallel) side walls that are connected by a bridging section, where the side walls are arranged to lie against the lingual and buccal sides of a person's teeth and the bridging section is arranged to be lie along the top of the crown of the person's teeth. The open section may then comprise a cut-out section of one of the side walls, such that a clinician is able to access a part of either the lingual or the buccal side of the person's teeth once the locator has been fitted onto the person's teeth.

The open section is typically arranged to expose one side of the row of teeth (e.g either a lingual side or a buccal side of the row of teeth). The open section may be arranged to expose a side of at least one tooth, at least three teeth, and/or at least five teeth.

The open section 11 is arranged to expose a substantial portion of a side of one or more teeth of the user so that a dentist is able to adjust and fit a retainer wire to these teeth. For example, the open section may be arranged to expose at least 30%, at least 50%, and/or at least 75% of a side (e.g. a lingual or buccal side) of one or more teeth. By exposing a substantial portion of the side, the open section provides a clinician with sufficient access to the teeth that the clinician can adjust the retainer wire and the carriers and the clinician can apply adhesive suitably.

The locator 10 is typically arranged to cover the buccal side of one or more teeth of a user while the open section 11 exposes the lingual side of those same teeth (or *vice versa* with the locator covering the lingual side of the teeth and the open section exposing the buccal side of the teeth).

As described in the summary of invention, fixed retainer wires may be affixed to rows of teeth in a variety of positions - on upper or lower jaws, on lingual or buccal sides - depending on the clinical situation for any given person. Most commonly, however, fixed retainers are positioned on the lingual side of a row of teeth, behind the front four or six teeth. The present invention is thus illustrated in relation to lingual fixed retainers, but the invention may easily be adapted to suit alternative retainer positions.

The locator 10 covers the buccal side of the row of teeth (not visible in the Figures), and the open section 11 exposes only the lingual side of the front six teeth in the illustrated embodiment.

The locator 10 is arranged to (or configured to) hold a retainer wire in position against a row of teeth, so that a clinician can apply adhesive without having to hold the wire in place. This may be accomplished in a variety of ways within the scope of the present invention.

In the embodiment illustrated in Figure 4, locating members or locating elements 12 are attached to the locator 10. The locating elements 12 take the form of arms which extend from the edge of the open section, outwards over the area of teeth exposed by the open section. Each locating element 12 has a locating portion 14 in the form of a hook positioned at the end of the arm, the hooks being sized to grasp a retainer wire. The locating elements extend out of the lingual side of the locator 10, in a direction approximately parallel to the plane of the lingual side of a tooth received in the locator 10. When the locator 10 is positioned over a row of teeth, the locating elements 12 lie along the back of the teeth, with the hooked locating portions 14 positioned over the area of the teeth to which a retainer wire is to be applied. In use, a retainer wire may be suspended from the hooks, so that the retainer wire is held in position against the lingual side of the teeth. A clinician may then apply adhesive to bond the wire to the teeth, cure the adhesive, and unhook the locating elements 12 from the retainer wire to remove the locator from the row of teeth.

Figure 5 shows an alternative embodiment of locating element 12, in which the locating arms do not have hooked sections. In the embodiment of Figure 5, the locating elements are straight arms formed from a resilient material, which project from the edge of the open section at an angle sharper than the backs of the teeth. When the locator 10 is positioned over a row of teeth, the locating elements 12 are forced out of their natural position to lie along the back of the teeth, but the resilient material creates a biasing force that biases the arms towards the back of the teeth in the direction of their natural position. In this embodiment, a retainer wire may be placed between the backs of the teeth and the locating element arms 12, and the biasing force of the locating elements 12 will hold the retainer wire in position against the teeth. The reverse side (tooth-facing side) of each locating elements 12 may optionally include a notch (not shown) sized to receive the retainer wire, so that the retainer wire is reliably located at the desired position along the length of the locating elements 12.

Figure 6 shows the locator 10 of Figure 5, with a straight retainer wire 16 positioned in the notches of the locating elements 12. Such a combination of the positioning device and a retainer wire 16 provides an orthodontic retainer kit according to a preferred aspect of the invention.

In use, the locator 10 is placed over the row of teeth, and a retainer wire 16 is placed in the locating elements. The locating elements then hold the retainer wire in a predetermined (e.g. correct) position relative to the row of teeth. For example, the locating elements may be arranged to hold the retainer at a certain height along the teeth (e.g. towards the middle of the teeth). Typically, the locating elements are arranged to hold the retainer wire in the position in which the wire should be fixed for use as a fixed retainer. The locating elements thus position the retainer wire in a desirable location without the clinician needing to hold the wire in position. A clinician such as a dentist or orthodontist then applies dental adhesive to the wire and the teeth to bond the retainer wire 16 to the teeth. As the task of holding the wire in position is carried out by the positioning device, the fitting procedure can be carried out more quickly, and the clinician can focus on applying adhesive accurately without also having to manipulate the wire 16.

It will be appreciated that while each person's mouth and teeth are different, there are substantial similarities between the teeth of various people. For example, the size of teeth and the arrangement of teeth (e.g. molars, canines, and incisors) is similar across populations. Therefore it is possible to provide the locating elements so as to position the retainer wire towards the middle of a person's teeth (e.g. to be between the gumline and the top of the crowns of a person's teeth). Using the open section of the locator 10, a dentist is then able to adjust the retainer wire if such adjustment is necessary.

As described above, the locator 10 may comprise a wall, which wall defines a channel, wherein the channel is arranged to be located over a user's teeth. The locator elements may then be arranged to position the retainer wire between 1 mm and 10mm from the base of the channel (which base is arranged to be adjacent the top of the crowns of a person's teeth). The locator elements may be arranged to position the retainer wire: at least 1mm from the base, at least 3mm from the base, and/or at least 5mm from the base. The locator elements may be arranged to position the retainer wire: no more than 10mm from the base, no more than 3mm from the base, and/or no more than 5mm from the base.

It will be appreciated that various sizes of the locator 10 and the locating elements are possible, e.g. to provide child-sized locators, to provide personalized locators, and/or to account for population differences.

The locator may be formed from a variety of materials, and take a variety of forms, as long as it has an open section that exposes the area of teeth to which the retainer wire is to be affixed, and as long as it fits over the row of teeth in a repeatable manner. For example the locator may be formed as a disposable moulded gumshield, intended as a single-use item for the retainer fitting procedure.

In the present invention, the locator 10 takes the form of a removable retainer, preferably a vacuum formed retainer (VFR). As a removable retainer is in many cases provided to act as a complementary solution to a fixed retainer, the process of forming a VFR already forms part of many orthodontic treatment regimes. A locator may be manufactured by forming a VFR using conventional processes and conventional materials, and then the VFR may be adapted to include an open section which exposes the teeth to which the fixed retainer is to be fitted. For example a VFR may be formed, and then a section may be removed from the VFR to expose the required teeth. Where the retainer wire is to be fitted to the lingual side of the front six teeth, for example, the section of the VFR that would usually cover the lingual side of the front six teeth would be removed to create the open section.

The locating elements 12 are preferably formed from the same material as the locator (for example polyurethane or acrylic when the locator is a VFR) although the present invention is not strictly limited to this, as the locating elements may be formed from different material. The locating elements may be attached to the locator during manufacturing, for example by ultrasonic welding. Alternatively the locating elements may be attached to the locator by elastic band placement or other types of materials that can complement this device to accomplish the described tasks above. Alternatively when a section of the VFR is removed to form the open section of the locator, the removed section may be shaped to leave sections of plastic extending into the open section, such that the extending sections then form locating elements.

As illustrated in the figures, the locating elements 12 are detachable from the locator 10. The locating elements may for example be formed with a line of weakness where they connect to the locator. This is particularly advantageous when the locator is formed as a VFR. After the locator has been used to fit a retainer wire to the row of teeth, the locating elements may be detached from the locator, leaving behind a VFR which is usable as a removable retainer. This advantageously allows the locator to serve a further function even after the fixed retainer has been fitted. Providing the removable retainer and the fixed retainer at the same time also means there is no time gap between retainer fitting appointments, so there is no time for teeth to move in the interim.

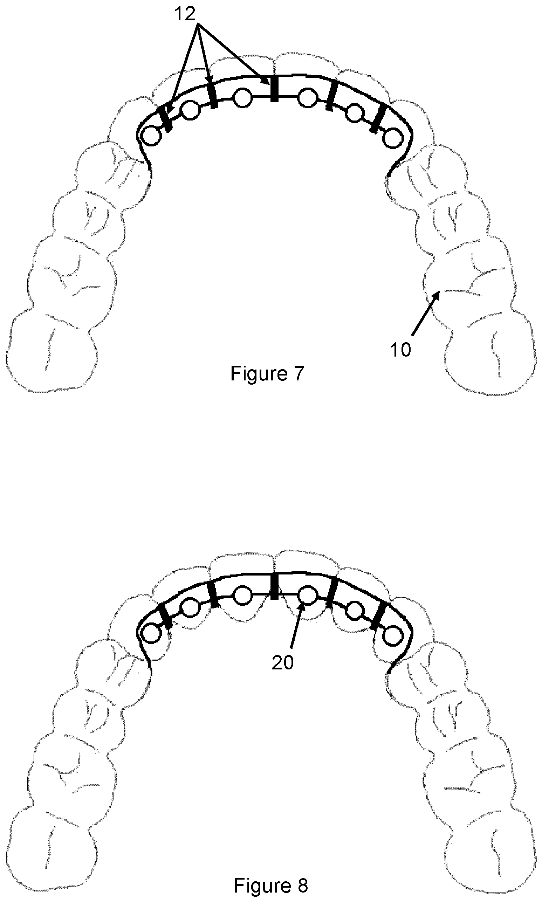

Figures 7-10 illustrate the locator 10 in an orthodontic retainer kit with a retainer wire 20 according to a preferred embodiment of the present invention.

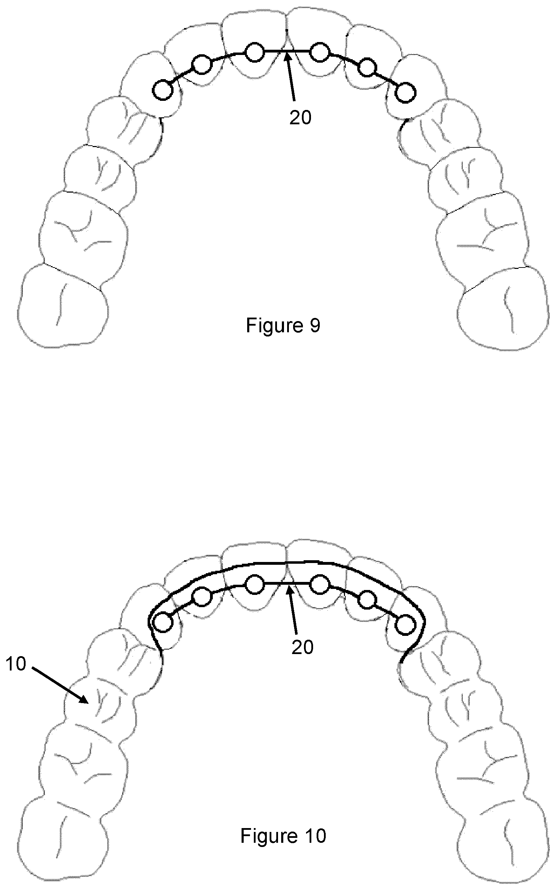

Figure 7 illustrates the retainer wire 20 mounted on locating elements 12 before the locator 10 is fitted over a row of teeth. Figure 8 shows the same locator 10 and retainer wire 20 worn over a row of teeth, so that the retainer wire is positioned correctly relative to the teeth for use as a fixed retainer. Figure 9 illustrates the retainer wire 20 adhered to the lingual side of the row of teeth after the retainer wire 20 has been adhered to the teeth, and Figure 10 illustrates the locator 10 being worn over the row of teeth as a removable retainer once the retainer wire 20 is fixed to the teeth.

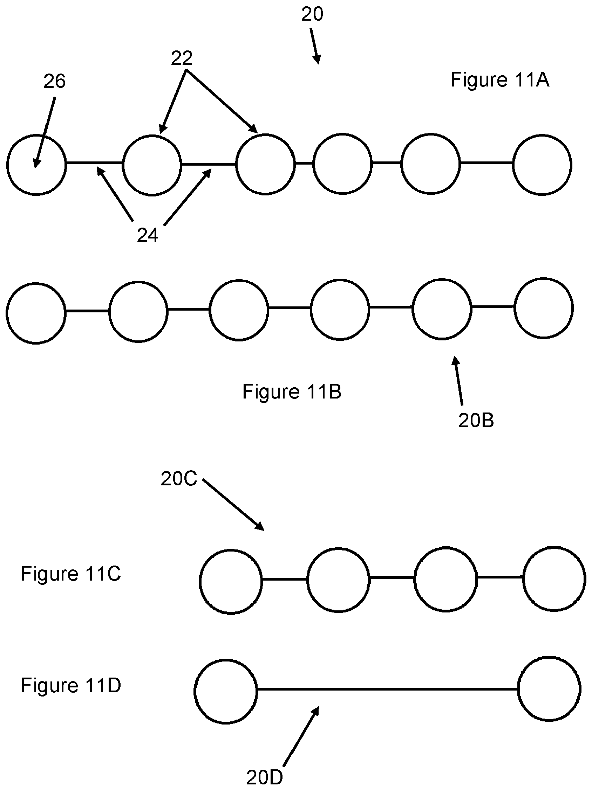

Embodiments of the retainer wire 20 are illustrated separately in Figures 11A-D.

The retainer wire 20 is formed from multi-strand stainless steel wire conventionally used for fixed retainer wires, though other wires such as nickel-titanium and titanium alloy wires may be used instead of stainless steel. Unlike conventional straight retainer wires, the retainer wire 20 is formed of six loops of wire connected by five straight connecting sections 24 of wire. Each loop of wire forms an annular adhesive carrier 22, and the loops of wire are fixed to the straight sections of wire for example by welding.

Each loop of wire forms an adhesive carrier 22 with an aperture 26 passing through the centre of the loop. Wire surrounds the aperture and forms a perimeter of the adhesive carrier.

In use, the retainer wire 20 is placed against the surface of the teeth, and dental adhesive is placed in the aperture 26 of each adhesive carrier 22. When the adhesive carriers are filled with adhesive, the adhesive is in contact with the surface of the teeth, and any excess adhesive is removed so that the adhesive surface is level with the non-tooth-facing face of the carrier. This advantageously creates a smooth and consistent adhesive bond on each tooth, and ensures consistent bond strength by giving each bond the same surface area between the adhesive and the teeth. The adhesive is then cured, and the carriers are permanently adhered to the teeth.

In a preferred embodiment, the retainer wire 20 is made-to-measure to suit the particular row of teeth to which the retainer wire is fixed. The retainer wire 20 may be tailored by measuring the distances between the teeth in the row of teeth (for example based on a dental impression or a 3D scan of the teeth), and forming the straight connecting sections 24 of wire to lengths which match the distances between the teeth. As the length of the retainer wire 20 and the separation of the adhesive carriers 22 are preferably made to exactly fit the teeth to which they are fitted, the task of aligning the retainer wire 20 correctly with the teeth is greatly simplified.

The number of adhesive carriers provided on the retainer wire 20 depends on the desired retainer layout, which is determined by a dental professional for individual cases. The retainer wire 20 may be provided with six adhesive carriers 22 as illustrated in Figures 7-10, so that the retainer wire is adhered to each of the front six teeth. Alternatively the retainer wire may comprise a different number of adhesive carriers, and/or the separations between the adhesive carriers may differ, so that the retainer wire is not attached to every tooth spanned by the retainer wire. In some embodiments, for example, the retainer wire may be arranged to (or configured to) span 8, 9 or 10 teeth, by forming the wire to the appropriate length and providing up to 8, 9 or 10 adhesive carriers respectively.

Figure 11A illustrates a retainer wire 20 in which the separation between adhesive carriers 22 is irregular, to fit a row of teeth having the same spacing.

Figure 11B shows an alternative retainer wire 20B with more regular spacing between the adhesive wells, suitable for a row of teeth with corresponding regular spacing.

Figure 11C shows a retainer wire 20C with four adhesive carriers 22. The overall length of the wire and the separation between the carriers correspond to measurements between four front teeth of a row of teeth.

Figure 11D shows a retainer wire 20D with two adhesive carriers. The overall length of the wire 20D and the separation between the two carriers correspond to the distance between the lateral incisors.

In other embodiments, the adhesive carriers may be formed from metal rings fixed to connecting sections of wire, rather than the carriers being formed from the same wire as the straight connecting sections.

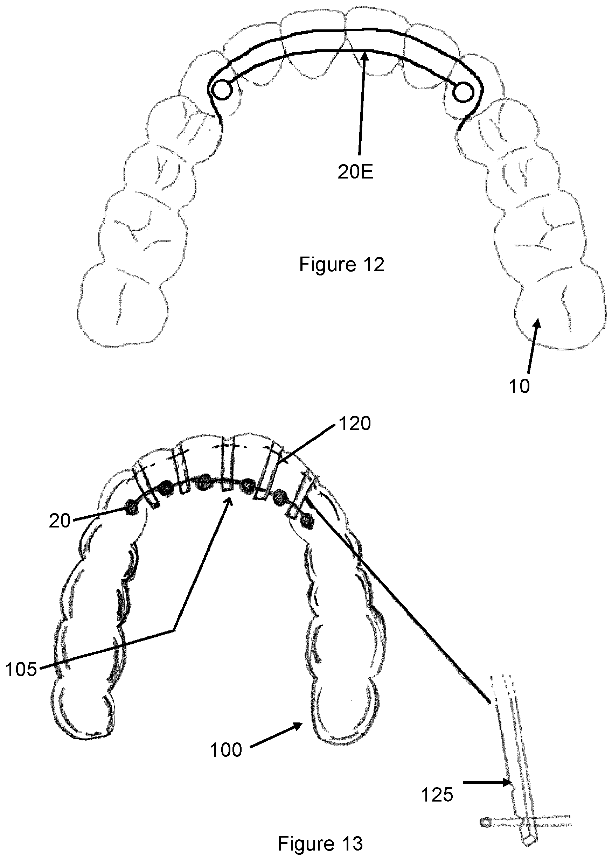

Figure 12 illustrates the locator 10 being worn as a removable retainer with an alternative retainer wire 20E, in which adhesive carriers 22 are provided only on the ends of the wire, in positions aligned with the canine teeth.

Figure 13 is a plan view of an alternative embodiment of the present invention including a VFR-locator 100 with an open section 105, and the retainer wire 20. The VFR locator 100 is similar to locator 10 described above, but the locating elements 120 are arranged differently. Rather than extending from the edge of the open section on the open lingual side of the locator, as is the case in locator 10, locating elements 120 are attached to the lingual side of the front of the locator, and project backwards towards the lingual side of the teeth. When worn, the locating elements may be positioned between adjacent teeth, or the locating elements may curve round the crowns of the teeth to end on the lingual side of the teeth. The locating elements 120 contain notches 125 for holding the retainer wire 20 in the intended position.

In use, the locator 100 is placed over the row of teeth, and a retainer wire 20 is placed in the locating elements 120. The locating elements then hold the retainer wire 20 in the correct position relative to the row of teeth (i.e. the position in which the wire should be fixed for use as a fixed retainer), with the adhesive carriers 22 aligned with the individual teeth in the row, without the clinician needing to hold the wire in position. A clinician such as a dentist or orthodontist then applies dental adhesive into the apertures of the adhesive carriers 22 until the apertures are filled with adhesive, with the adhesive carriers held against the teeth surfaces by the locating elements. Excess adhesive is scraped off to leave the adhesive flush with the edges of the adhesive carriers, and the adhesive is cured to bond the retainer wire 20 to the teeth. As the task of holding the wire in position is carried out by the positioning device, the fitting procedure can be carried out more quickly, and the clinician can focus on applying adhesive accurately without also having to manipulate the wire 20. The adhesive carriers also ensure that the adhesive bonds are all the same size and shape, and that the bonds are perfectly aligned with the intended teeth. Overall, the use of the positioning device and the retainer wire 20 with adhesive carriers significantly speeds up the process of fitting a permanent retainer to a row of teeth, which lowers costs and improves access to dental care. In preferred embodiments, the locating elements 120 can then be detached from the locator 100, and the locator 100 can be used as a removable retainer to further reduce the likelihood of tooth movement.

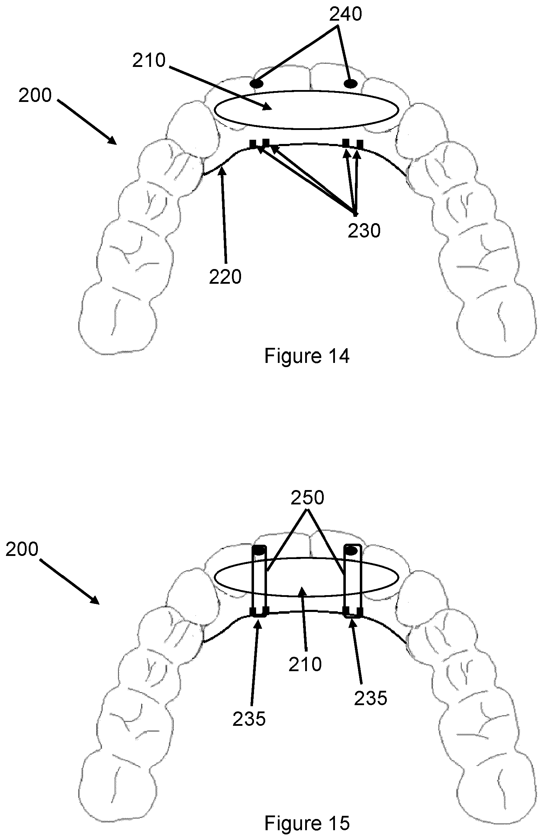

Figures 14 and 15 are schematic illustrations of a retainer positioning device 200 according to another aspect of the present invention.

In the embodiment of Figures 14 and 15, the open section is provided as a window 210 formed through the lingual side of the positioning device. Unlike the open section 11 in the preceding figures, which is formed by a gap in the material of the positioning device 10, the window 210 is fully surrounded by the material of the positioning device 200, which in the illustrated embodiment is thermoplastic VFR material.

Two pairs of notches 230 are formed in the apical edge 220 of the lingual side of the positioning device 200. Each pair of notches creates a projection 235 around which an elastic band can be hooked. These notches may be formed by cutting slits or notches in the material of the positioning device. The pairs of slits/notches 230 can also be replicated on the contralateral side (buccal side) to allow hooking of an elastic band.

On the coronal side of the window 210, between the window 210 and the tip of the lingual side, and in line with the pairs of notches 230, there are two button-shaped projections 240 around which the other end of an elastic band can be hooked. These projections 240 may be moulded during the manufacture of the positioning device 200, or they may be adhered to the positioning device before use.

When the positioning device 200 is donned over a row of teeth, a lingual area of the row of teeth is exposed through the window 210.

The positioning device 200 is used with locating members in the form of two elastic bands 250 (though different numbers may easily be used). As shown in Figure 16, the two elastic bands are stretched across the window 210 by hooking a first end of each band into the notches 230 and around the projection 235, and hooking the opposite end of each band around one of the button-shaped projections 240.

With the two elastic bands 250 stretched across the window, a retainer wire (not shown in Figures 14 and 15) can be held in position against the row of teeth by the elastic force of the bands. The button-shaped projections may be provided in different positions, even on the buccal side of the positioning device 200, as long as the elastic bands are stretched across the window opening when they are hooked around the projections.

After the device 200 has been used to fit a retainer wire, the projections 235, 240 can easily be removed by cutting them off the positioning device 200. The positioning device can then be used as a removable retainer, as described above. If the device 200 is designed with bilateral slits or notches, on both the buccal and lingual sides, these can be left or trimmed post-placement and bonding of the fixed wire by the user.

## Claims

1. An orthodontic retainer positioning device arranged to locate a retainer wire on a row of teeth, the device comprising:
a locator (10, 100) arranged to fit over at least a portion of a row of teeth, wherein the locator (10, 100) comprises an open section (11, 105) that is arranged to expose an area of the row of teeth; and
one or more locating members (12, 120) connected to the locator (10, 100), the locating members (12, 120) being arranged to support a retainer wire (16, 20) so that, in use, the locating members (12, 120) hold the retainer wire (16, 20) in position relative to the area of the row of teeth so as to aid the fitting of the retainer wire (16, 20) to the row of teeth;
wherein the locating members (12, 120) are detachable from the locator (10, 100) such that the locator (10, 100) is usable as a removable retainer once the locating members (12, 120) have been detached.

2. An orthodontic retainer positioning device according to claim 1, wherein the locating members (12, 120) are arranged to hold the retainer wire (16, 20) in position such that the retainer wire (16, 20) may be adjusted via the open section (11, 105) of the locator (10, 100).

3. An orthodontic retainer positioning device according to any preceding claim, wherein the locating members (12, 120) are arranged to be releasable from the retainer wire (16, 20) once the retainer wire (16, 20) has been fitted such that, once the retainer wire (16, 20) has been fitted, the locator (10, 100) can be removed from the row of teeth.

4. An orthodontic retainer positioning device according to any preceding claim, wherein the locator (10, 100) comprises a vacuum formed retainer.

5. An orthodontic retainer positioning device according to any preceding claim, wherein the locator (10, 100) is moulded to receive the row of teeth.

6. An orthodontic retainer positioning device according to any preceding claim, wherein the locator (10, 100) comprises a u-shaped wall that defines a channel, wherein the locator (10, 100) is arranged to be placed over a row of teeth such that the teeth are located in the channel.

7. An orthodontic retainer positioning device according to claim 6, wherein the open section (11, 105) comprises a cut-out that extends along the wall of the locator (10, 100).

8. An orthodontic retainer positioning according to any preceding claim, wherein:
the open section (11, 105) is arranged to expose a lingual and/or buccal side of at least three teeth and/or at least five teeth.

9. An orthodontic retainer positioning device according to any preceding claim, wherein the locator (10, 100) is arranged to support the retainer wire (16, 20) in a predetermined position on a lingual side of the row of teeth, wherein the locating members (12, 120) are attached to the lingual side of the locator (10, 100).

10. An orthodontic retainer positioning device according to any preceding claim, wherein the locating members (12, 120) comprise locating arms, wherein each locating arm is attached to the locator at a first end of the arm, and wherein each locating member is arranged to support the retainer wire at or near a second end of the locating arm.

11. An orthodontic retainer positioning device according to any preceding claim, wherein the locating members (12, 120) are arranged to protrude into the open section (11, 105).

12. An orthodontic retainer positioning device according to any preceding claim, wherein:
the locating members (12, 120) are arranged to support the retainer wire (16, 20) by holding the retainer wire (16, 20) between the locating members (12, 120) and a row of teeth onto which the locator (10, 100) is placed; and/or
the locating members (12, 120) each comprise a notch, hook, slot or slit formed in the locating member (12, 120) so as to support the retainer wire (16, 20) in the position; and/or
the locating members (12, 120) are arranged to apply a biasing force to hold the retainer wire (16, 20) in position.

13. An orthodontic retainer kit, comprising:
an orthodontic retainer positioning device according to any preceding claim; and
an orthodontic retainer wire (16, 20) comprising a plurality of adhesive carriers (22) arranged to receive a quantity of adhesive, wherein the adhesive carriers (22) are fixed in position relative to the retainer wire (16, 20).

14. An orthodontic retainer kit according to claim 13, wherein:
the adhesive carriers (22) are annular in shape and comprise apertures (26) through the retainer wire (16, 20), preferably wherein the adhesive carriers (22) are formed by loops of wire formed integrally with the retainer wire (16, 20), the apertures (26) being formed in the loops of wire; and/or
the retainer wire (16, 20) is manufactured based on measurements taken from the row of teeth, and the adhesive carriers (22) are positioned on the retainer wire (16, 20) to correspond to the spacing of the row of teeth.

15. A method of manufacturing an orthodontic retainer positioning device according to any of claims 1 to 12, the method comprising the steps of:
providing a locator (10, 100) arranged to receive at least a portion of a row of teeth wherein the locator (10, 100) comprises an open section (11, 105) arranged to expose an area of the row of teeth; and
forming locating members (12, 120) on the locator (10, 100), the locating members (12, 120) being arranged to support a retainer wire (16, 20);
wherein the locating members (12, 120) are arranged to support the retainer wire (16, 20) in a predetermined position relative to the area of the row of teeth to which the retainer wire (16, 20) is to be fitted; and
wherein the locating members (12, 120) are detachable from the locator (10, 100) such that the locator (10, 100) is usable as a removable retainer once the locating members (12, 120) have been detached.

## Patentansprüche

1. Vorrichtung zum Positionieren eines kieferorthopädischen Retainers, die angeordnet ist, um einen Retainer-Draht an einer Zahnreihe zu lokalisieren, wobei die Vorrichtung umfasst:
einen Positionsgeber (10, 100), der angeordnet ist, um über wenigstens einen Abschnitt einer Zahnreihe zu passen, wobei der Positionsgeber (10, 100) einen offenen Bereich (11, 105) umfasst, der angeordnet ist, um eine Fläche der Zahnreihe freizulegen; und
ein oder mehrere mit dem Positionsgeber (10, 100) verbundene Positionierelemente (12, 120), wobei die Positionierelemente (12, 120) angeordnet sind, um einen Retainer-Draht (16, 20) zu stützen, sodass die Positionierelemente (12, 120) in Verwendung den Retainer-Draht (16, 20) relativ zu der Fläche der Zahnreihe an der Position halten, um das Anbringen des Retainer-Drahts (16, 20) an der Zahnreihe zu erleichtern;
wobei die Positionierelemente (12, 120) von dem Positionsgeber (10, 100) abnehmbar sind, sodass der Positionsgeber (10, 100) nach dem Abnehmen der Positionierelemente (12, 120) als entfernbarer Retainer verwendet werden kann.

2. Vorrichtung zum Positionieren eines kieferorthopädischen Retainers nach Anspruch 1, wobei die Positionierelemente (12, 120) angeordnet sind, um den Retainer-Draht (16, 20) an der Position zu halten, sodass der Retainer-Draht (16, 20) über den offenen Abschnitt (11, 105) des Positionsgebers (10, 100) angepasst werden kann.

3. Vorrichtung zum Positionieren eines kieferorthopädischen Retainers nach einem der vorstehenden Ansprüche, wobei die Positionierelemente (12, 120) angeordnet sind, um von dem Retainer-Draht (16, 20) lösbar zu sein, sobald der Retainer-Draht (16, 20) derart angebracht wurde, dass nach dem Anbringen des Retainer-Drahts (16, 20) der Positionsgeber (10, 100) von der Zahnreihe entfernt werden kann.

4. Vorrichtung zum Positionieren eines kieferorthopädischen Retainers nach einem der vorstehenden Ansprüche, wobei der Positionsgeber (10, 100) einen vakuumgeformten Retainer umfasst.

5. Vorrichtung zum Positionieren eines kieferorthopädischen Retainers nach einem der vorstehenden Ansprüche, wobei der Positionsgeber (10, 100) geformt ist, um die Zahnreihe aufzunehmen.

6. Vorrichtung zum Positionieren eines kieferorthopädischen Retainers nach einem der vorstehenden Ansprüche, wobei der Positionsgeber (10, 100) eine U-förmige Wand umfasst, die einen Kanal definiert, wobei der Positionsgeber (10, 100) angeordnet ist, um über eine Zahnreihe platziert zu werden, sodass sich die Zähne in dem Kanal befinden.

7. Vorrichtung zum Positionieren eines kieferorthopädischen Retainers nach Anspruch 6, wobei der offene Bereich (11, 105) eine Aussparung umfasst, die sich entlang der Wand der Positionsgebers (10, 100) erstreckt.

8. Positionieren eines kieferorthopädischen Retainers nach einem der vorstehenden Ansprüche, wobei:
der offene Bereich (11, 105) ist angeordnet ist, um eine linguale und/oder bukkale Seite von wenigstens drei Zähnen und/oder wenigstens fünf Zähnen freizulegen.

9. Vorrichtung zum Positionieren eines kieferorthopädischen Retainers nach einem der vorstehenden Ansprüche, wobei der Positionsgeber (10, 100) angeordnet ist, um den Retainer-Draht (16, 20) in einer vorbestimmten Position auf einer lingualen Seite der Zahnreihe zu stützen, wobei die Positionierelemente (12, 120) an der lingualen Seite des Positionsgebers (10, 100) befestigt sind.

10. Vorrichtung zum Positionieren eines kieferorthopädischen Retainers nach einem der vorstehenden Ansprüche, wobei die Positionierelemente (12, 120) Positionierarme umfassen, wobei jeder Positionierarm an einem ersten Ende des Arms an dem Positionsgeber befestigt ist und wobei jedes Positionierelement angeordnet ist, um den Retainer-Draht an oder nahe einem zweiten Ende des Positionierarms zu stützen.

11. Vorrichtung zum Positionieren eines kieferorthopädischen Retainers nach einem der vorstehenden Ansprüche, wobei die Positionierelemente (12, 120) angeordnet sind, um in den offenen Bereich (11, 105) hineinzuragen.

12. Vorrichtung zum Positionieren eines kieferorthopädischen Retainers nach einem der vorstehenden Ansprüche, wobei:
die Positionierelemente (12, 120) angeordnet sind, um den Retainer-Draht (16, 20) zu stützen, indem der Retainer-Draht (16, 20) zwischen den Positionierelementen (12, 120) und einer Zahnreihe, auf die der Positionsgeber (10, 100) platziert wird, gehalten wird; und/oder
die Positionierelemente (12, 120) jeweils eine Kerbe, einen Haken, einen Schlitz oder einen Spalt umfassen, die in dem Positionierelement (12, 120) ausgebildet sind, um den Retainer-Draht (16, 20) an der Position zu halten; und/oder
die Positionierelemente (12, 120) angeordnet sind, um eine Vorspannkraft anzuwenden, um den Retainer-Draht (16, 20) an der Position zu halten.

13. Kit für einen kieferorthopädischen Retainer, umfassend:
eine Vorrichtung zum Positionieren eines kieferorthopädischen Retainers nach einem der vorstehenden Ansprüche; und
einen kieferorthopädischen Retainer-Draht (16, 20), der eine Mehrzahl von Klebstoffträgern (22) umfasst, die angeordnet sind, um eine bestimmte Menge an Klebstoff aufzunehmen, wobei die Klebstoffträger (22) relativ zu dem Retainer-Draht (16, 20) an der Position fixiert sind.

14. Kit für einen kieferorthopädischen Retainer nach Anspruch 13, wobei:
die Klebstoffträger (22) ringförmig sind und Öffnungen (26) durch den Retainer-Draht (16, 20) umfassen, wobei die Klebstoffträger (22) vorzugsweise durch Drahtschlaufen ausgebildet sind, die einstückig mit dem Retainer-Draht (16, 20) ausgebildet sind, wobei die Öffnungen (26) in den Drahtschlaufen ausgebildet sind; und/oder
der Retainer-Draht (16, 20) auf Grundlage von an der Zahnreihe vorgenommenen Messungen gefertigt wird, und die Klebstoffträger (22) auf dem Retainer-Draht (16, 20) positioniert werden, um dem Abstand der Zahnreihe zu entsprechen.

15. Verfahren zum Fertigen einer Vorrichtung zum Positionieren eines kieferorthopädischen Retainers nach einem der Ansprüche 1 bis 12, wobei das Verfahren die Schritte umfasst:
Bereitstellen eines Positionsgeber (10, 100), der angeordnet ist, um wenigstens einen Abschnitt einer Zahnreihe aufzunehmen, wobei der Positionsgeber (10, 100) einen offenen Bereich (11, 105) umfasst, der angeordnet ist, um eine Fläche der Zahnreihe freizulegen; und
Ausbilden von Positionierelementen (12, 120) an dem Positionsgeber (10, 100), wobei die Positionierelemente (12, 120) angeordnet sind, um einen Retainer-Draht (16, 20) zu stützen;
wobei die Positionierelemente (12, 120) angeordnet sind, um den Retainer-Draht (16, 20) an einer vorbestimmten Position relativ zu der Fläche der Zahnreihe zu stützen, an dem der Retainer-Draht (16, 20) angebracht werden soll; und
wobei die Positionierelemente (12, 120) von dem Positionsgeber (10, 100) abnehmbar sind, sodass der Positionsgeber (10, 100) nach dem Abnehmen der Positionierelemente (12, 120) als entfernbarer Retainer verwendet werden kann.

## Revendications

1. Dispositif de positionnement d'appareil de contention orthodontique configuré pour positionner un fil de contention sur une rangée de dents, le dispositif comprenant :
un dispositif de placement (10, 100) adapté pour s'ajuster sur au moins une partie d'une rangée de dents, dans lequel le dispositif de placement (10, 100) comprend une section ouverte (11, 105) qui est configurée pour exposer une zone de la rangée de dents ; et
un ou plusieurs éléments de positionnement (12, 120) reliés au dispositif de placement (10, 100), les éléments de positionnement (12, 120) étant configurés pour supporter un fil de contention (16, 20) de sorte que, lors de l'utilisation, les éléments de positionnement (12, 120) maintiennent le fil de contention (16, 20) en position par rapport à la zone de la rangée de dents de façon à aider l'ajustement du fil de contention (16, 20) à la rangée de dents ;
dans lequel les éléments de positionnement (12, 120) sont détachables du dispositif de placement (10, 100) de sorte que le dispositif de placement (10, 100) est apte à être utilisé en tant que dispositif de contention amovible une fois que les éléments de positionnement (12, 120) ont été détachés.

2. Dispositif de positionnement d'appareil de contention orthodontique selon la revendication 1, dans lequel les éléments de positionnement (12, 120) sont configurés pour maintenir le fil de contention (16, 20) en position de sorte que le fil de contention (16, 20) peut être ajusté par l'intermédiaire de la section ouverte (11, 105) du dispositif de placement (10, 100).

3. Dispositif de positionnement d'appareil de contention orthodontique selon l'une quelconque des revendications précédentes, dans lequel les éléments de positionnement (12, 120) sont configurés pour être libérables du fil de contention (16, 20) une fois que le fil de contention(16, 20) a été ajusté de sorte que, une fois que le fil de contention (16, 20) a été ajusté, le dispositif de placement (10, 100) peut être retiré de la rangée de dents.

4. Dispositif de positionnement d'appareil de contention orthodontique selon l'une quelconque des revendications précédentes, dans lequel le dispositif de placement (10, 100) comprend un appareil de contention moulé sous vide.

5. Dispositif de positionnement d'appareil de contention orthodontique selon l'une quelconque des revendications précédentes, dans lequel le dispositif de placement (10, 100) est moulé pour recevoir la rangée de dents.

6. Dispositif de positionnement d'appareil de contention orthodontique selon l'une quelconque des revendications précédentes, dans lequel le dispositif de placement (10, 100) comprend une paroi en forme de u qui définit un canal, dans lequel le dispositif de placement (10, 100) est configuré pour être placé sur une rangée de dents de sorte que les dents sont positionnées dans le canal.

7. Dispositif de positionnement d'appareil de contention orthodontique selon la revendication 6, dans lequel la section ouverte (11, 105) comprend une découpe qui s'étend le long de la paroi du dispositif de placement (10, 100).

8. Positionnement d'appareil de contention orthodontique selon l'une quelconque des revendications précédentes, dans lequel :
la section ouverte (11, 105) est configurée pour exposer un côté lingual et/ou buccal d'au moins trois dents et/ou d'au moins cinq dents.

9. Dispositif de positionnement d'appareil de contention orthodontique selon l'une quelconque des revendications précédentes, dans lequel le dispositif de placement (10, 100) est configuré pour supporter le fil de contention (16, 20) dans une position prédéterminée sur un côté lingual de la rangée de dents, dans lequel les éléments de positionnement (12, 120) sont fixés au côté lingual du dispositif de placement (10, 100).

10. Dispositif de positionnement d'appareil de contention orthodontique selon l'une quelconque des revendications précédentes, dans lequel les éléments de positionnement (12, 120) comprennent des bras de positionnement, dans lequel chaque bras de positionnement est fixé au dispositif de placement au niveau d'une première extrémité du bras, et dans lequel chaque élément de positionnement est configuré pour supporter le fil de contention au niveau ou à proximité d'une deuxième extrémité du bras de positionnement.

11. Dispositif de positionnement d'appareil de contention orthodontique selon l'une quelconque des revendications précédentes, dans lequel les éléments de positionnement (12, 120) sont configurés pour faire saillie dans la section ouverte (11, 105).

12. Dispositif de positionnement d'appareil de contention orthodontique selon l'une quelconque des revendications précédentes, dans lequel :
les éléments de positionnement (12, 120) sont configurés pour supporter le fil de contention (16, 20) en maintenant le fil de contention (16, 20) entre les éléments de positionnement (12, 120) et une rangée de dents sur laquelle le dispositif de placement (10, 100) est placé ; et/ou
les éléments de positionnement (12, 120) comprennent chacun une encoche, un crochet, un créneau ou une fente formée dans l'élément de positionnement (12, 120) de manière à supporter le fil de contention (16, 20) dans la position ; et/ou
les éléments de positionnement (12, 120) sont configurés pour appliquer une force de sollicitation pour maintenir le fil de contention (16, 20) en position.

13. Kit de contention orthodontique, comprenant :
un dispositif de positionnement d'appareil de contention orthodontique selon l'une quelconque des revendications précédentes ; et
un fil de contention orthodontique (16, 20) comprenant une pluralité de supports adhésifs (22) configurés pour accueillir une quantité d'adhésif, dans lequel les supports adhésifs (22) sont dans une position fixe par rapport au fil de contention (16, 20).

14. Kit de contention orthodontique selon la revendication 13, dans lequel :
les supports adhésifs (22) sont de forme annulaire et comprennent des ouvertures (26) à travers le fil de contention (16, 20), de préférence dans lequel les supports adhésifs (22) sont formés par des boucles de fil formées d'un seul tenant avec le fil de contention (16, 20), les ouvertures (26) étant formées dans les boucles de fil ; et/ou
le fil de contention (16, 20) est fabriqué sur la base de mesures prises à partir de la rangée de dents, et les supports adhésifs (22) sont positionnés sur le fil de contention (16, 20) pour correspondre à l'espacement de la rangée de dents.

15. Procédé de fabrication d'un dispositif de positionnement d'appareil de contention orthodontique selon l'une quelconque des revendications 1 à 12, le procédé comprenant les étapes suivantes :
la fourniture d'un dispositif de placement (10, 100) configuré pour accueillir au moins une partie d'une rangée de dents, dans lequel le dispositif de placement (10, 100) comprend une section ouverte (11, 105) configurée pour exposer une zone de la rangée de dents ; et
la formation d'éléments de positionnement (12, 120) sur le dispositif de placement (10, 100), les éléments de positionnement (12, 120) étant configurés pour supporter un fil de contention (16, 20) ;
dans lequel les éléments de positionnement (12, 120) sont configurés pour supporter le fil de contention (16, 20) dans une position prédéterminée par rapport à la zone de la rangée de dents à laquelle le fil de contention (16, 20) doit être ajusté ; et
dans lequel les éléments de positionnement (12, 120) sont détachables du dispositif de placement (10, 100) de sorte que le dispositif de placement (10, 100) est apte à être utilisé en tant que dispositif de contention amovible une fois que les éléments de positionnement (12, 120) ont été détachés.
